# EUROPÄISCHE PATENTSCHRIFT

(11) **EP 2 400 708 B1**
(45) Veröffentlichungstag und Bekanntmachung des Hinweises auf die Patenterteilung: **04.12.2013**
(21) Anmeldenummer: 10006472.4
(22) Anmeldetag: 22.06.2010
(51) Int. Cl.: H04L 29/06

(54) **Netzwerk-Schutzeinrichtung**
Network protection device
Dispositif de protection de réseau

(43) Veröffentlichungstag der Anmeldung: 28.12.2011
(73) Patentinhaber: Siemens Aktiengesellschaft, 80333 München (DE)
(72) Erfinder: Arnold, Johann, 90530 Wendelstein (DE); Gerlach, Hendrik, 91058 Erlangen (DE); Herberth, Harald, 90522 Oberasbach (DE); Plaum, Reiner, 91052 Erlangen (DE); Talanis, Thomas, 91336 Heroldsbach (DE)

(56) Entgegenhaltungen:
- EP-A1- 1 879 350
- WO-A1-02/13481
- DE-A1- 10 331 307
- US-A1- 2008 320 582
- TED DOTY: "A FIREWALL OVERVIEW" CONNEXIONS, XX, XX, Bd. 9, Nr. 7, 1. Juli 1995 (1995-07-01), Seiten 20-23, XP000564023 ISSN: 0894-5926
- "A TECHNICAL OVERVIEW OF THE LUCENT VPN FIREWALL" WHITE PAPER LUCENT TECHNOLOGIES, XX, XX, 1. August 2002 (2002-08-01), Seiten 1-35, XP002271173
- Plomer, M.: "Network Firewalls" TU Darmstadt 2003, XP002606183 Gefunden im Internet: URL:http://www.sec.informatik.tu-darmstadt .de/pages/lehre/WS02-03/seminar/ausarbeitu ngen/Firewalls.pdf [gefunden am 2010-10-21]

## Beschreibung

Die vorliegende Erfindung betrifft eine Netzwerk-Schutzeinrichtung zur Kontrolle der Kommunikation einer externen Datenverarbeitungs-Einrichtung außerhalb eines Automatisierungsnetzwerks mit einer Automatisierungseinrichtung in dem Automatisierungsnetzwerk, wobei zur Kommunikation mit der Automatisierungseinrichtung ein Automatisierungsprotokoll vorgesehen ist.

Derartige Netzwerk-Schutzeinrichtungen sind aus dem Stand der Technik bekannt, zum Beispiel aus US 2008/0320582.

Automatisierungsgeräte werden zunehmend beispielsweise mit größeren Office-Kommunikationsnetzwerken vernetzt, die jedoch häufig relativ offen zugänglich sind. Dadurch gewinnen Sicherheitsaspekte auch in der Automatisierungstechnik immer mehr an Bedeutung. Um unerlaubte Zugriffe auf die Automatisierungsgeräte zu vermeiden oder zu reduzieren, werden oft so genannte "Firewalls" als Netzwerk-Schutzeinrichtung eingesetzt. Solche Firewalls schützen dahinter befindliche Netzwerke, indem sie den Datenverkehr zu diesem Netzwerk basierend auf einem Satz von Regeln (so genannte Firewall-Regeln) filtern. Typische Filteraktionen dabei sind, Datenpakete beispielsweise zu sperren, zurückzuweisen oder passieren zu lassen.

Allgemein wird zur Beschreibung von Kommunikationsvorgängen häufig das sogenannte "OSI-Schichtmodell" verwendet. Innerhalb des OSI-Schicht-Modells werden die Einzelaufgaben bei einem Kommunikationsvorgang in im Allgemeinen sieben aufeinander aufbauende Schichten unterteilt. Bei einem so genannten TCP/IP-Kommunikationsprotokoll, wie es z.B. im nachfolgend genannten Stand der Technik verwendet wird, entspricht dabei der OSI-Schicht 3 die IP-Vermittlungsschicht, während der OSI-Schicht 4 die TCP/UDP-Transportschicht entspricht. Die oberste OSI-Schicht 7 entspricht dann der sogenannten "Anwendungsschicht", d.h. diese enthält dann die eigentlichen Kommunikationsdaten, die vom Sender zum Empfänger übertragen werden sollen.

Die oben genannten Netzwerk-Schutzeinrichtungen sind beispielsweise aus der europäischen Veröffentlichungsschrift EP 2091199 A2, der deutsche Offenlegungsschrift DE 103 31 307 A1 oder auch der US-Veröffentlichungsschrift US 2008/0320582 A1 bekannt. Die darin offenbarten Firewalls treffen ihre Filter-Entscheidungen auf Basis von Informationen, die in der oben genannten "OSI-Schicht 3" oder "OSI-Schicht 4" relevant sind. Diese aus dem Stand der Technik bekannten Firewalls fällen ihre Entscheidungen beispielsweise auf der Grundlage der IP-Adresse (Herkunfts- und/oder Zieladresse) (OSI-Schicht 3), so genannter "Ports" und/oder beispielsweise IP-Protokoll-Typen wie z. B. UDP, TCP, ICMP. Daher können die bekannten Firewalls bestimmte Ziel- und Quell-IP-Adressen sowie bestimmte Ziel-Ports zulassen oder sperren und so den Zugang zu einem durch sie geschützten Netz kontrollieren.

Es ist ein Nachteil des genannten Standes der Technik, dass derartige Netzwerk-Schutzeinrichtungen immer an entsprechende Änderungen in einem dahinterliegenden Netzwerk angepasst werden müssen und beispielsweise Geräte mit vorher unbekannter IP-Adresse nicht einfach in ein solches Netz aufgenommen werden können. Des Weiteren ist es auch schwer, Geräte mit dynamischer IP-Adresse, aber gleichbleibendem DNS-Namen aufzunehmen.

Daher ist es eine Aufgabe der vorliegenden Erfindung, eine Netzwerk-Schutzeinrichtung zur Verfügung zu stellen, mit welcher sich ein industrielles Automatisierungsnetzwerk flexibler und einfacher gegen einen unautorisierten oder unerwünschten Zugriff von außen schützen lässt.

Diese Aufgabe wird gelöst von einer Netzwerk-Schutzeinrichtung nach Anspruch 1.

Dabei wird unter einer Protokoll-Nachricht des Automatisierungsprotokolls im Zusammenhang mit der vorliegenden Beschreibung eine Nachricht gemäß dem Automatisierungsprotokoll in einer der Schichten 5 oder darüber, gemäß dem vorstehend genannten OSI-Schichtmodell, verstanden. Insbesondere wird unter einer Protokoll-Nachricht eine Nachricht auf der OSI-Schicht 7, der so genannten Anwendungsschicht, verstanden.

Dadurch, dass die Netzwerk-Schutzeinrichtung den Inhalt der Protokoll-Nachricht heranzieht, um über eine Weiterleitung oder Nicht-Weiterleitung einer eingehenden Protokoll-Nachricht zu entscheiden, kann eine solche Entscheidung beispielsweise unabhängig von Adress-Informationen auf Schicht 3 oder Schicht 4-Ebene erfolgen, also beispielsweise unabhängig von der IP-Adresse. Vielmehr kommt es in erster Linie auf logische Informationen oder Adressen unabhängig von der konkreten physikalischen Netz-Konfiguration an. Auf diese Weise können beispielsweise neue Geräte einfacher in ein Automatisierungsnetzwerk integriert werden, da die Netzwerk-Schutzeinrichtung derart einrichtbar ist, dass bei den Sicherheits-Vorgaben die konkrete physikalische Netzkonfiguration keine, bzw. eine untergeordnetere Rolle spielt.

Entsprechende Netzwerk-Schutzeinrichtungen lassen sich so z.B. einfacher einrichten (dazu gehört z.B. das Aufstellen der Filter-Regeln), da entsprechende Protokoll-Regeln auch ohne konkrete Kenntnisse der physikalischen Netz-Konfiguration erstellbar sind. Eine solche Netzwerk-Schutzeinrichtung ermöglicht es z. B., bestimmte Automatisierungs-spezifische Anfragen (z. B. Umparametrierungen, Diagnosen, Betriebsartenwechsel) zuzulassen oder zu verbieten, wobei diese Zulassungen bzw. Nichtzulassungen derartiger Anfragen beispielsweise Anwender- bzw. Nutzer-spezifisch sein kann. Durch die Verschiebung der Auswahlkriterien einer derartigen Netzwerk-Schutzeinrichtung auf Inhalte oberhalb der OSI-Schicht 4 lässt sich somit eine flexiblere und einfachere Konfiguration einer Netzwerk-Schutzeinrichtung für ein Automatisierungsnetzwerk erreichen.

Ein Automatisierungsnetzwerk kann z.B. als industrielles Automatisierungsnetzwerk ausgebildet sein. Solche industriellen Automatisierungsnetzwerke können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungsnetzwerke bzw. industrielle Automatisierungsnetzwerke Echzeit-Kommunikationsprotokolle (z.B. Profinet, Profibus, Real-Time-Ethernet) zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungsnetzwerk bzw. industriellen Automatisierungsnetzwerk vorgesehen sein, z.B. zum Überwachen, Einrichten, Umprogrammieren oder/oder Umparametrieren einer oder mehrerer Steuerungseinheiten im Automatisierungsnetzwerk.

Ein Automatisierungsnetzwerk kann z.B. drahtgebundene Kommunikation und/oder drahtlose Kommunikation umfassen.

Netzwerk-Schutzeinrichtungen können beispielsweise so genannte "Firewalls" sein. Netzwerk-Schutzeinrichtungen können weiterhin beispielsweise zusätzlich zur Schutzfunktion mit einer "Switch-" oder "Router-" Funktionalität versehen sein. Dabei ermöglicht derartige Zusatz-Funktionalität beispielsweise eine Um-Adressierung von eingehenden und ausgehenden Nachrichten, wobei diese Um-Adressierungsfähigkeit nicht zwangsläufig immer im Betrieb genützt werden muss.

Weiterhin kann die Schutzfunktionalität beispielsweise auch mit einer "Bridge"-Funktionalität versehen sein, bei welcher die Nachrichten beispielsweise immer ohne Adress-Änderungen durchgeleitet werden.

Die Funktionalität einer Netzwerk-Schutzeinrichtung kann aber auch auf die reine Schutzfunktion von durch sie hindurchgeleiteten Nachrichten des Automatisierungsprotokolls beschränkt sein.

Eine Netzwerk-Schutzeinrichtung ist dabei derart ausgebildet, dass mindestens ein Teilnehmer in dem Automatisierungsnetzwerk gemäß den Protokoll-Regeln von einem unautorisierten Zugriff Dritter geschützt ist. Insbesondere schützt die Netzwerk-Schutzeinrichtung alle oder zumindest bestimmte Teilnehmer im Automatisierungsnetz entsprechend.

Die externe Datenverarbeitungs-Einrichtung befindet sich außerhalb des Automatisierungsnetzwerks, sie ist also kein Teilnehmer des Automatisierungsnetzwerks. Die externe Datenverarbeitungs-Einrichtung kann beispielsweise über eine Einzelverbindung mit der Netzwerk-Schutzeinrichtung verbunden sein oder auch Teil eines weiteren Daten- oder Kommunikationsnetzes sein, wie beispielsweise mit dem Internet verbunden, Teilnehmers eines LAN, eines WAN, oder auch eines weiteren Automatisierungsnetzes sein.

Die externe Datenverarbeitungseinrichtung kann über das Automatisierungsprotokoll beispielsweise mit einer, mindestens einer, mehreren oder allen Automatisierungsgeräten im Automatisierungsnetzwerk kommunizieren. Eine Datenverarbeitungseinrichtung kann jegliche Art von Computer, Controller, Kommunikationsgerät, Kommunikationsendgerät oder sonstigem elektrischen oder elektronischem Gerät sein, welches zur Kommunikation mit einer Automatisierungseinrichtung fähig, ausgebildet, eingerichtet und/oder geeignet ist.

Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein- und/oder Ausgabegeräte oder Ähnliches zum Anschluss an einer speicherprogrammierbare Steuerung sein oder solche umfassen.

Die Netzwerk-Schutzeinrichtung kann beispielsweise derart mit dem Automatisierungsnetzwerk verbunden sein, dass ein Zugang von außen auf das Automatisierungsnetzwerk nur über die Netzwerk-Schutzeinrichtung möglich ist. Weiterhin kann die Netzwerk-Schutzeinrichtung derart in das Automatisierungsnetzwerk integriert bzw. an dieses angeschlossen sein, dass auch ein Zugang, zumindest auf Teile des Automatisierungsnetzwerkes, ohne Kontrolle durch die Netzwerk-Schutzeinrichtung möglich ist. Auf diese Weise kann die Netzwerk-Schutzeinrichtung z.B. nur Teile des Automatisierungsnetzwerkes schützen oder beispielsweise nur die Nachrichten von bestimmten externen Datenverarbeitungseinrichtungen kontrolliert.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das Profi-Bus-Protokoll (z. B. gemäß IEC 61158/EN50170), ein Profi-Bus-DP-Protokoll, ein Profi-Bus-PA-Protokoll, ein Profi-Net-Protokoll, ein Profi-Net-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernt-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Unter einer Protokoll-Nachricht wird, wie vorstehend bereits ausgeführt, der Inhalt einer Kommunikationsnachricht zwischen der externen Datenverarbeitung-Einrichtung und der Automatisierungs-Einrichtung oberhalb der OSI-Schicht 4, insbesondere in der OSI-Schicht 7, verstanden. Ein Inhalt solch einer Protokoll-Nachrichten kann beispielsweise einen oder mehrere Befehle an eine Automatisierungseinrichtung, einen oder mehrere Befehle, die durch ein Steuerungsprogramm einer Automatisierungseinrichtung ausführbar sind sowie Anfragen, Daten, Informationen, Programme bzw. Programmteile, Parameter und/oder Konfigurationsraten für die Automatisierungseinrichtung bzw. zur Sendung an die externe Datenverarbeitungs-Einrichtung umfassen oder aufweisen. Weiterhin kann der Inhalt der Protokoll-Nachricht auch logische Adress-Informationen, Geräte-Informationen oder Geräte-Typ-Informationen umfassen oder aufweisen.

Die Netzwerk-Schutzeinrichtung kann dabei derart ausgestaltet sein, dass die Entscheidung über eine Weiterleitung oder Nicht-Weiterleitung einer Protokoll-Nachricht unter Anderem von den Protokoll-Regeln bzw. vom Inhalt der Protokoll-Nachricht abhängig ist. Weiterhin kann die Netzwerk-Schutzeinrichtung auch derart ausgestaltet sein, dass die Entscheidung über eine Weiterleitung oder Nicht-Weiterleitung einer Protokoll-Nachricht ausschließlich von den Protokoll-Regeln bzw. ausschließlich vom Inhalt der Protokoll-Nachricht abhängig ist.

Eine Netzwerk-Schutzeinrichtung gemäß der vorliegenden Beschreibung kann z.B. eine Protokoll-Nachricht gemäß der vorliegenden Beschreibung abhängig vom Inhalt der Protokoll-Nachricht sperren, zurückweisen (z. B. sperren mit entsprechender Meldung) oder weiterleiten, je nach dem, wie sie anhand des Inhalts bzw. eines Teils des Inhalts im Lichte der Protokoll-Regeln und ggf. weiterer Regeln zu behandeln ist.

Eine Netzwerk-Schutzeinrichtung gemäß der vorliegenden Beschreibung kann beispielsweise als eine OSI-Schicht -7 Firewall mit entsprechenden Automatisierungsprotokoll-Regeln ausgestaltet sein.

Die Netzwerk-Schutzeinrichtung kann beispielsweise derart ausgebildet sein, dass bei einer Nichtweiterleitung der Protokoll-Nachricht eine Informations-Nachricht bezüglich der Nicht-Weiterleitung entsprechend dem Automatisierungsprotokoll an die externe Datenverarbeitungseinrichtung gesendet wird.

Dabei kann die Informations-Nachricht beispielsweise eine Information über die Nicht-Weiterleitung oder eine Information über den korrekten Empfang, beispielsweise in der Schutzeinrichtung, umfassen. Die Informations-Nachricht kann beispielsweise durch die Netzwerk-Schutzeinrichtung selbst versendet werden oder auch durch die Netzwerk-Schutzeinrichtung zumindest getriggert werden.

Auf diese Weise erhält der Sender der Nachricht eine "Quittung", an welcher er erkennen kann, dass die Nachricht korrekt übertragen wurde - zumindest bis zur Neztwerk-Schutzeinrichtung. Damit kann beispielsweise verhindert werden, dass der Sender der Nachricht diese Nachricht nochmals sendet, da er ohne Quittung davon ausgehen würde, dass beispielsweise durch ein Übertragungsproblem die Nachricht nicht ordnungsgemäß übertragen wurde. Weiterhin sind solche Quittungen in vielen Automatisierungsprotokollen standardmäßig vorgesehen, so dass auf diese Weise die Netzwerk-Schutzeinrichtung auch in dem Fall, in dem eine Nachricht nicht weitergeleitet wird, konform dem Automatisierungsprotokoll arbeitet.

Weiterhin kann die Netzwerk-Schutzeinrichtung zu einer adresstransparenten Arbeitsweise ausgebildet sein. Zudem kann zur Realisierung dieser adresstransparenten Arbeitsweise die Netzwerk-Schutzeinrichtung weiterhin als Stellvertreter für die durch sie geschützten Teilnehmer des Automatisierungsnetzes arbeiten oder eingerichtet bzw. ausgebildet sein.

Unter einer adresstransparenten Arbeitsweise wird eine solche Arbeitsweise verstanden, bei welcher die Netzwerk-Schutzeinrichtung die Adresse des Empfängers und/oder Senders der Protokollnachricht, insbesondere eine Schicht-3-Adresse (z.B. IP-Adresse) oder eine Schicht-4-Adresse, unverändert lässt. Insbesondere kann dabei eine Arbeitsweise verstanden werden, bei welcher die Adresse von Sender und Empfänger der Protokoll-Nachricht, insbesondere die vorstehend genannten Adressen, durch die Netzwerk-Schutzeinrichtung nicht verändert wird. Bei der Übertragung einer Protokoll-Nachricht von der externen Datenverarbeitungseinrichtung an die Automatisierungseinrichtung kann dabei die Senderadresse die Adresse der externen Datenverarbeitungseinrichtung sein, beispielsweise eine Schicht-3-Adresse (z. B. eine IP-Adresse) der externen Datenverarbeitungseinrichtung sein oder auch eine Adresse entsprechend einer höheren OSI-Schicht. Die EmpfängerAdresse kann beispielsweise die Schicht-3-Adresse der Automatisierungseinrichtung (z. B. deren IP-Adresse) oder auch deren Adresse gemäß einer höheren OSI-Schicht sein. Entsprechendes gilt für Nachrichten von der Automatisierungseinrichtung zur externen Datenverarbeitungseinrichtung.

Dabei kann die Netzwerk-Schutzeinrichtung derart ausgebildet sein, dass ihre eigenen Schnittstellen zwar entsprechende Adressen aufweisen, diese aber bei der Übertragung einer Protokollnachricht nicht genützt werden. Die Netzwerk-Schutzeinrichtung kann derart ausgebildet sein, dass ihre Schnittstellen keine eigenen derartigen Adressen aufweisen und beispielsweise alle zwischen einem Eingang der Netzwerk-Schutzeinrichtungen an einem entsprechenden Ausgang der Netzwerk-Schutzeinrichtung passierenden Protokoll-Nachrichten zumindest unter Anderem gemäß den Protokoll-Regeln gefiltert werden.

Eine derartige Netzwerk-Schutzeinrichtung lässt sich einfacher an ein Automatisierungsnetz ankoppeln, da viele der Automatisierungsprotokolle eine direkte Adressierung bevorzugen und die Übertragung von Protokoll-Nachrichten unter Verwendung von eigenen Adressen der Netzwerk-Schutzeinrichtung möglicherweise schwieriger oder gar unmöglich wird.

Zudem lässt sich eine derartige Netzwerk-Schutzeinrichtung auch deshalb einfacher in ein Automatisierungsnetz integrieren bzw. an ein solches ankoppeln, weil Automatisierungsprotokolle - im Gegensatz zu vielen IT-Protokollen - nicht Proxy-fähig sind. Das bedeutet, dass es nicht möglich ist, neben der eigentlichen Zieladresse der Protokoll-Nachricht die Adresse eines Gateways oder einer zwischengeschalteten Netzwerk-Schutzeinrichtung anzugeben. Durch die adresstransparente Ausgestaltung der Netzwerk-Schutzeinrichtung kann diese ihre Schutzfunktion ausüben, ohne dass solche Zwischenadressen angeben werden müssen.

Eine derartige Netzwerk-Schutzeinrichtung mit Adresstransparenz kann beispielsweise als so genannte "Bridge" ausgebildet sein. Weiterhin kann eine derartige Netzwerk-Schutzeinrichtung als Firewall für ein IP-Netz oder eine Firewall für ein IP-Netz mit Adresstransparenz durch Verwendung von Proxy-ARP realisiert sein.

In dem Fall, in welchem die Netzwerk-Schutzeinrichtung als Stellvertreter für die durch sie geschützten Teilnehmer arbeitet, lenkt sie die Protokollnachrichten beispielsweise zu den geschützten Geräten auf sich. Dadurch kann beispielsweise erreicht werden, dass die Netzwerk-Schutzeinrichtung alle Protokoll-Nachrichten an die durch sie geschützten Geräte analysieren kann, ohne dass an diesen Geräten Änderungen erforderlich sind.

Weiterhin kann die Netzwerk-Schutzeinrichtung derart ausgebildet und eingerichtet sein, dass wahlweise eine adresstransparente oder eine nicht-adresstransparente Arbeitsweise einstellbar, konfigurierbar und/oder vorgebbar ist.

Auf diese Weise kann eine Netzwerk-Schutzeinrichtung flexibel an die Eigenheiten eines jeweils verwendeten Automatisierungsnetzes und/oder Automatisierungsprotokolls angepasst werden - und ist damit auch einfacher an verschiedene Anwendungen und Netze anpassbar. Das Einrichten der jeweiligen Arbeitsweise kann dabei beispielsweise an der Netzwerk-Schutzeinrichtung selber erfolgen oder beispielsweise über deren Konfiguration über einen externen Rechner oder ein entsprechende Steuerprogramm. Weiterhin kann die Netzwerkschutzeinrichtung auch zur automatischen Einrichtung der adress-transparenten oder resstransparenten Arbeitsweise ausgebildet sein, abhängig beispielsweise von einem eingestellten oder detektierten Automatisierungs-Protokoll oder Spezifikationen bzw. Vorgaben von Teilnehmern im Automatisierungsnetz.

In einer vorteilhaften Ausgestaltung kann vorgesehen sein, dass der Inhalt der Protokollnachricht eine Automatisierungs-Aktion in der die Protokollnachricht empfangenden Automatisierungs-Einrichtung auslöst bzw. zum Auslösen einer solchen Automatisierungs-Aktion vorgesehen ist. Die Protokoll-Regeln können dann Vorgaben umfassen, die die Entscheidung über eine Weiterleitung oder Nicht-Weiterleitung der Protokoll-Nachricht von der auszulösenden Automatisierungs-Aktion und/oder der Art der auszulösenden Automatisierungs-Aktion abhängig macht.

Eine derartige Ausgestaltung oder Formulierung der Protokoll-Regeln hat z.B. den Vorteil, dass die Regeln unabhängig von Adress-Informationen, sonstigen Konfigurations-Informationen und/oder sonstigen Konfigurations-Informationen der beteiligten Kommunikationsnetzwerke sind. Die Entscheidung über eine Blockierung oder Weiterleitung der Protokoll-Nachricht wird allein über eine Wirkung oder eine Art der Wirkung der Protokoll-Nachricht gefällt. Damit vereinfacht sich die Integration und Einrichtung und einer solchen Netzwerk-Schutzeinrichtung, da der Betreiber beim Einrichten beispielsweise die Adress- bzw. Konfigurationsinformationen nicht benötigt und auch bei Änderungen beispielsweise im Automatisierungsnetz eine Netzwerk-Schutzeinrichtung nicht entsprechend diesen Änderungen, beispielsweise den Adressen von neu installierten Geräten, angepasst werden muss.

Eine Protokoll-Nachricht löst beispielsweise dann eine Automatisierungs-Aktion aus, wenn sie einen Vorgang und/oder eine Aktion in oder bei einem Teilnehmer des Automatisierungsnetzes auslöst. Insbesondere wird z.B. dann eine Automatisierungs-Aktion durch die Protokoll-Nachricht ausgelöst, wenn ein Vorgang an oder in einer Automatisierungseinrichtung des Automatisierungsnetzes ausgelöst wird, der an einer Steuerung und/oder Regelung eines gesteuerten Gerätes (z. B. ein Computer, eine Maschine, eine Anlage, eine Produktions-Anlage oder eine Produktions-Straße) mitwirkt.

Eine Automatisierungs-Aktion kann entweder ausschließlich innerhalb eines Teilnehmer des Automatisierungsnetzes, beispielsweise auch rein softwaremäßig erfolgen. Weiterhin kann eine Automatisierungs-Aktion in einem Teilnehmer auch mittelbare und/oder unmittelbare Auswirkungen auf das vom Automatisierungsnetz gesteuerte Gerät bzw. innerhalb des Automatisierungsnetzes gesteuerte Gerät haben.

Automatisierungs-Aktionen können beispielweise umfassen:
- Eine Betriebsarten-Umschaltung, insbesondere ein Starten oder Anhalten eines Vorganges, und/oder
- das Laden eines Automatisierungs-Programms, und/oder
- das Setzen von Parametern, Informationen und/oder Werten in einem Steuerungsmodul oder Automatisierungsgerät und/oder
- das Auslesen von Parametern, Werten oder Informationen aus einem Steuerungsmodul oder Automatisierungsgerät, und/oder
- die Steuerung oder Regelung eines Automatisierungsprogramms oder der Eingriff in ein Automatisierungsprogramm, und/oder
- die Ansteuerung eines Sensors oder Aktors.

Dabei können auszulesende oder zu setzende Informationen beispielsweise Diagnose-Informationen, beispielsweise eines Diagnose-Puffers sein. Die Steuerung oder Regelung eines Automatisierungs-Programms oder der Eingriff darin kann beispielsweise das Setzen von Haltepunkten oder ein Ablauf im Einschrittbetrieb beispielsweise in einem Test-Betrieb sein.

Automatisierungs-Aktionen können beispielsweise weiterhin sein:
- eine Betriebsarten-Umschaltung wie beispielsweise Starten, Stoppen, usw.;
- Auswertung automatisierungs-spezifischer Adressierungen (z. B. S7-Adresse);
- Anwenderprogramme laden, Anwenderbausteine umparametrieren, und/oder Parameter lesen;
- Hardware konfigurieren;
- Test- und Inbetriebnahme (z. B. Haltepunkte setzen, Einzelschritt-Betrieb einstellen oder betreiben);
- Eine Diagnose (z. B. lesen eines Diagnosepuffers);
- eine Bedienaktion im Produktiv- oder Testbetrieb.

Weiterhin kann die Netzwerk-Schutzeinrichtung Protokoll-Regeln umfassen, die die Entscheidung über das Weiterleiten oder Nicht-Weiterleiten der Protokoll-Nachricht unter anderem oder auch ausschließlich von zeitlichen und/oder örtlichen Vorgaben abhängig macht. Solche Vorgaben können beispielsweise Tageszeiten oder auch Gesamt-Betriebsstunden oder Ähnliches sein. Auf diese Weise können beispielsweise einzelne Änderungen oder Einstellungen in einem Automatisierungsbetrieb nur während bestimmten Tages- oder auch Nachtzeiten, beispielsweise während einer Tag-Schicht, vorgenommen werden. Damit kann z.B. erreicht werden, dass keine Eingriffe in ein gesteuertes Gerät erfolgen, während z. B. nachts nur eine geringe Belegschaft in einer Produktionsanlage anwesend ist.

Örtliche Vorgaben können beispielsweise bestimmte Gebäude, Räume oder auch geografische Standorte sein. Auf diese Weise kann beispielsweise vorgesehen sein, dass bestimmte Änderungen in einem Automatisierungsnetz nur aus einer speziellen Steuerwarte vorgenommen werden und nicht direkt beispielsweise aus einer Produktionshalle. Auch so lässt sich die Fehleranfälligkeit durch eine solche Netzwerk-Schutzeinrichtung weiter erhöhen.

Weiterhin können die Protokollregeln, Vorgaben umfassen, die die Entscheidung über das Weiterleiten der Protokoll-Nachricht weiterhin, oder ausschließlich, von einem Betriebszustand eines oder mehrere Elemente des AutomatisierungsNetzwerks oder einer oder mehrere mit dem Automatisierungsnetzwerk verbundenen Einrichtungen abhängig macht. Solche Einrichtungen können beispielsweise ein gesteuertes Gerät oder eine gesteuerte Maschine bzw. allgemein gesteuerte Aktoren und/oder auszulesende Sensoren sein.

So kann die Netzwerk-Schutzeinrichtung beispielsweise derart eingerichtet sein, dass das Schreiben eines bestimmten Datenwortes nur in einem Betriebszustand bzw. Anlagenzustand "InBetriebnahme" einer gesteuerten Anlage zulässig ist, während in einem Zustand "Produktiv-Betrieb" der Anlage nur das Lesen des entsprechenden Datenworts zulässig ist.

Die vorstehend genannten Ausgestaltungsmöglichkeiten der Protokollregeln unter Berücksichtigung einer durch eine Protokoll-Nachricht ausgelöste Automatisierungsaktion ermöglichen es nun anders als bisher möglich, Regeln zu definieren, die nicht, wie bisher bei heutigen Firewalls üblich, an IP-Adressen und/oder Ports und/oder IP-Protokoll-Typen gebunden sind, sondern auf bestimmte, automatisierungstechnische Handlungsziele ausgerichtet sind. Damit wird eine teilweise oder auch vollständige Unabhängigkeit der Netzwerk-Schutzeinrichtung von speziellen physikalischen Netz-Konfigurationen eines externen Netzes oder Automatisierungsnetzes erreicht. Dies erleichtert die Einrichtung einer derartigen Netzwerk-Schutzeinrichtung und/oder reduziert die Fehleranfälligkeit bzw. verbessert die Schutzwirkung durch eine solche Netzwerk-Schutzeinrichtung. Weiterhin wird die Netzwerk-Schutzeinrichtung auch einfacher an entsprechende Änderungen im geschützten oder angeschlossenen Netzwerk anpassbar.

In einer weiteren vorteilhaften Ausgestaltung umfassen die in der Netzwerk-Schutzeinrichtung hinterlegten Protokoll-Regeln Vorgaben, die die Entscheidung über das Weiterleiten oder Nicht-Weiterleiten der Protokoll-Nachricht weiterhin von einem Sender und/oder einem Auftraggeber und/oder einem Empfänger der Protokoll-Nachricht abhängig macht. Dabei können die Sender, Auftraggeber und/oder Empfänger durch ihre Adresse, beispielsweise ihre IP-Adresse, oder eine logische Adresse oder einen Gerätename oder eine Gerätebezeichnung charakterisiert sein bzw. unter Anderem charakterisiert sein. Eine Adresse kann beispielsweise eine Schicht-3-Adresse, eine Schicht-4-Adresse oder auch eine Adresse gemäß einer Schicht oberhalb der Schicht 4 sein, insbesondere eine Schicht-7-Adresse.

Auf diese Weise lassen sich besser und einfacher Regeln für den Schutz eines Automatisierungsnetzes erreichen, da bestimmte Protokoll-Nachrichten somit z.B. auch noch über ihren Inhalt hinaus durch Angabe von Empfänger und/oder Sender oder insbesondere auch bestimmten Kombinationen aus Sendern und Empfängern eingeschränkt werden können.

Weiterhin können Sender und Empfänger beispielsweise auch durch bestimmte Geräteklassen, -Kategorien und/oder -Cluster gegeben sein. Somit können beispielsweise die Protokoll-Regeln Vorgaben umfassen, welche einer bestimmten Kategorie von Sendern und/oder Auftraggebern gestatten, bestimmte Protokoll-Nachrichten an eine bestimmte Automatisierungseinrichtung oder eine bestimmte Kategorie oder Klasse von Automatisierungseinrichtungen zu versenden. Eine solche Klasse von Sendern oder Auftraggebern kann beispielsweise ein Inbetriebsetzer, ein "Bedienen- und -Beobachten-System", ein Monteur, ein Automatisierungstechniker, ein Servicetechniker oder ein Anlagenbediener sein. Auf diese Weise können verschiedene Kategorien von Sendern und/oder Auftraggebern der Protokoll-Nachrichten verschiedene Möglichkeiten gegeben werden, auf das Automatisierungsnetzwerk zuzugreifen und in dieses einzugreifen.

Dabei kann die Netzwerk-Schutzeinrichtung beispielsweise dafür sorgen, dass entsprechende Bedienerfehler reduziert werden, da beispielsweise nur entsprechend geschulte Personen die Möglichkeit haben, entsprechende möglicherweise kritische Protokoll-Nachrichten (und z.B. damit verbundene Steuerbefehle) an eine Automatisierungseinrichtung im Automatisierungsnetzwerk zu senden. Eine Einstufung in derartige Sender- oder Auftraggeberkategorien kann beispielsweise über einen entsprechenden Zugang der entsprechenden Personen zur externen Datenverarbeitungseinrichtung, beispielsweise über einen so genannten "User Account" mit einem Passwort, eingerichtet und geregelt sein.

Die in der Netzwerk-Schutzeinrichtung hinterlegten Protokoll-Regeln können weiterhin Vorgaben umfassen, die die Entscheidung über ein Weiterleiten oder ein Nicht-Weiterleiten der Protokoll-Nachricht weiterhin vom Vorliegen eines einem Sender und/oder Auftraggeber der Protokoll-Nachricht zugeordneten Sicherheitscodes abhängig macht. Weiterhin kann vorgesehen sein, dass die Protokoll-Nachricht nicht weitergeleitet wird, wenn der den Sender und/oder Auftraggeber der Protokoll-Nachricht zugeordnete Sicherheits-Code nicht vorliegt. Solche Sicherheits-Codes können beispielsweise die Eingabe eines Passworts beispielsweise zur Authentifizierung eines Senders oder Nutzers bei der elektronischen Datenverarbeitungseinrichtung oder auch ein entsprechendes Passwort, das beispielsweise beim Versenden der Protokoll-Nachricht eingegeben werden muss, ausgebildet sein.

Weiterhin kann beispielsweise ein entsprechender Sicherheits-Code auch auf einer Speicherkarte, einer Chipkarte oder in einem sonstigen elektronischen Speicher vorgesehen sein, welchen beispielsweise ein Nutzer oder Sender einer entsprechenden Protokoll-Nachricht an die Datenverarbeitungseinrichtung koppeln muss oder an ein mit der die Protokoll-Nachricht versendenden Datenverarbeitungseinrichtung verbundenen Geräts koppelt.

Auf diese Weise kann die Übertragung von Protokoll-Nachrichten noch einfacher und besser gesteuert bzw. durch die Netzwerk-Schutzeinrichtung reglementiert werden, da die Beschränkung bestimmter beispielsweise Aktionen im Automatisierungsnetzwerk auf einen sehr gut definierten und kontrollierten Personenkreis eingeschränkt werden kann.

Weiterhin können die in der Netzwerk-Schutzeinrichtung hinterlegten Protokoll-Regeln Vorgaben umfassen, die die Entscheidung über das Weiterleiten oder Nicht-Weiterleiten einer Protokoll-Nachricht weiterhin von einer Authentifizierung eines Senders und/oder Auftraggebers der Protokoll-Nachricht abhängig macht. Eine solche Authentifizierung kann beispielsweise wiederum über einen der vorstehend genannten Sicherheits-Codes, wie beispielsweise ein Passwort erfolgen. Die vorstehend genannten Möglichkeiten der Beschränkung der Übertragung von Protokoll-Nachrichten zumindest unter Anderem durch Berücksichtigung eines solchen Sicherheits-codes oder einer solche Authentifizierung ermöglichen beispielsweise einen sehr effizienten Zugriffsschutz auf das Automatisierungsnetzwerk von außen durch eine dem Automatisierungsnetzwerk zugeordnete Netzwerk-Schutzeinrichtung. Dies macht sowohl die Konfiguration des Automatisierungsnetzwerkes selbst als auch eines externen Kommunikationsnetzes, welches einen Zugriff auf das Automatisierungsnetzwerk gestattet, einfacher, da derartige Sicherheitsüberprüfungen in der Netzwerk-Schutzeinrichtung durchgeführt werden und somit z.B. andere Geräte im Automatisierungsnetz (z.B. Steuerungsmodule) von einer solchen Aufgabe entlastet werden.

Die vorstehend genannte Aufgabe wird weiterhin gelöst durch ein Verfahren zur Steuerung der Kommunikation einer externen Datenverarbeitungseinrichtung außerhalb eines Automatisierungsnetzwerkes mit einer Automatisierungseinrichtung in dem Automatisierungsnetzwerk durch eine Netzwerk-Schutzeinrichtung gemäß der vorliegenden Beschreibung, umfassend die Schritte:
a) Empfangen einer Protokoll-Nachricht des Automatisierungsprotokolls von der externen Datenverarbeitungs-Einrichtung durch die Netzwerk-Schutzeinrichtung, und
b) Weiterleiten der Protokoll-Nachricht, wenn der Inhalt der Protokoll-Nachricht den Vorgaben der Protokoll-Regeln zur Weiterleitung entspricht und/oder Nicht-Weiterleiten der Protokoll-Nachricht, wenn der Inhalt der Protokoll-Nachricht den Vorgaben der Protokoll-Regel zur Weiterleitung nicht entspricht.

Dabei können die Netzwerk-Schutzeinrichtung, die Protokoll-Nachricht, der Inhalt der Protokoll-Nachricht sowie die in den Protokoll-Regeln und die darin gemachten Vorgaben beispielsweise gemäß der vorliegenden Beschreibung ausgestaltet sein.

Zusätzlich zu den vorstehend genannten Verfahrensschritten kann weiterhin vorgesehen sein, dass bei einer Nichtweiterleitung der Protokoll-Nachricht eine Informations-Nachricht bezüglich der Nichtweiterleitung entsprechend dem Automatisierungsprotokoll an die externe Datenverarbeitungseinrichtung gesendet wird. Dabei kann die Informations-Nachricht wiederum gemäß der vorliegenden Beschreibung ausgestaltet sein.

Über ein solches Verfahren lässt sich wiederum eine einfachere Anpassung bzw. Änderung oder auch Konfiguration eines Automatisierungsnetzwerkes im Hinblick auf einen ZugriffsSchutz durch externe Datenverarbeitungseinrichtungen erreichen, da die Regeln zur Weiterleitung oder Nichtweiterleitung zumindest unter Anderem vom Inhalt einer z.B. von der externen Datenverarbeitungs-Einrichtung an die Automatisierungseinrichtung gesendeten Protokoll-Nachricht abhängig sind. Dabei ist der Inhalt der Protokoll-Nachricht durch den Inhalt dieser Nachricht oberhalb einer OSI-Schicht 4, insbesondere dem Inhalt innerhalb der Anwendungsschicht (OSI-Schicht 7) gegeben. Auf diese Weise können die Weiterleitungs-Regeln in der Netzwerk-Schutzeinrichtung z.B. zumindest teilweise oder auch ganz unabhängig der konkreten physikalischen Konfiguration des Automatisierungsnetzwerkes (z. B. die dort verwendeten IP-Adressen oder MAC-Adressen) formuliert werden.

Die vorliegende Erfindung betrifft somit eine Netzwerk-Schutzeinrichtung, die automatisierungs-spezifische Protokolle (in der vorliegenden Beschreibung auch Automatisierungs-Protokoll genannt) versteht und decodieren kann. Damit ist sie in der Lage, automatisierungs-spezifische Anforderungen, Aufträge oder Anfragen zu decodieren und zu identifizieren und deren Weiterleitung in das durch die Netzwerk-Schutzeinrichtung gesicherte Automatisierungsnetzwerk bzw. zur darin befindlichen Automatisierungseinrichtung zu erlauben oder zu verbieten.

Mit einer solchen Netzwerk-Schutzeinrichtung ist es nun, anders als bisher möglich, Regeln zu definieren, die nicht, wie bei heutigen Firewalls üblich, an IP-Adressen und/oder Ports und/oder IP-Protokoll-Typen ausschließlich gebunden sind. Es wird damit erstmals möglich, zumindest auf bestimmte automatisierungstechnische Handlungsziele, entweder ausschließlich oder zumindest unter Anderem, zu filtern.

Wenn das Automatisierungsprotokoll ein geeignetes Verfahren zur Authentifizierung von entsprechenden Benutzern unterstützt (z. B. durch ein Passwort oder Passwort-Hash), kann die Netzwerk-Schutzeinrichtung auch diese Authentifizierung prüfen, ohne dass die empfangende Automatisierungseinrichtung diese Authentifizierung kennen und/oder unterstützen muss.

Die Netzwerk-Schutzeinrichtung überprüft die automatisierungsspezifischen Telegramme innerhalb der Protokoll-Nachricht anhand seiner Regeln. Die Regeln ergeben sich aus den zugelassenen, verbotenen Handlungszielen. Wenn die Regeln ergeben, dass das Telegramm passieren darf, wird es weitergeleitet, andernfalls wird es abgelehnt. Im Gegensatz zu üblichen Firewalls bzw. Netzwerk-Schutzeinrichtungen, wird es häufig nicht möglich sein, ein Telegramm einfach zu verwerfen, da die typischen Automatisierungsprotokolle oder automatisierungs-spezifischen Protokolle üblicherweise auf höheren Protokoll-Ebenen (höher als OSI-Schicht-4, typischerweise auf OSI-Schicht-7) arbeiten und deshalb Quittungen für entsprechende Aufträge erwarten. Bleiben solche Quittungs- oder Informationsnachrichten gemäß dem Automatisierungsprotokoll aus, kann dies zu sogenannten "Timeouts" und unter Umständen sogar zu erheblichen Störungen in der Kommunikation führen. Aus diesem Grund muss die Netzwerk-Schutzeinrichtung ggf. auch in der Lage sein, Informations- Nachrichten bzw. Quittungen konform zum Automatisierungsprotokoll zu erzeugen. Sofern dies im Automatisierungsprotokoll vorgesehen ist, kann bzw. muss es sich dabei um negative Quittungen in Form einer entsprechenden Informations-Nachricht handeln.

Ein weiteres Problem heutiger Automatisierungsprotokolle besteht darin, dass sie, im Gegensatz zu vielen IT-Protokollen beispielsweise für den Office-Bereich, nicht "proxy-fähig" sind. Das heißt, es ist nicht möglich, neben der Ziel-Adresse die Adresse eines entsprechenden "Gateways" oder einer zwischengeschalteten weiteren Schutzeinrichtung anzugeben (während z. B. HTTP einen so genannten HTTP-Proxy ermöglicht).

Aus diesem Grund kann die Netzwerk-Schutzeinrichtung vorteilhafterweise adresstransparent ausgestaltet sein. Dies kann beispielsweise dadurch realisiert sein, dass die Stützeinrichtung für alle durch sie geschützten Automatisierungseinrichtungen im Automatisierungsnetzwerk (z. B. definiert durch eine Liste von Geräten) als Stellvertreter arbeitet. Dabei lenkt sie den Verkehr zu den geschützten Geräten auf sich. Dadurch wird es möglich, dass die Stützeinrichtung alle Telegramme analysieren kann, ohne dass an den entsprechenden Automatisierungseinrichtungen Änderungen erforderlich sind.

Die vorstehend genannten zugelassenen bzw. nichtzugelassenen Handlungsziele können in einer einem Automatisierungstechniker (der beispielsweise ein solches Kommunikations- oder Automatisierungsnetzwerk einrichtet) vertrauten Form definiert sein. Die Ziele beziehen sich auf die entsprechenden Automatisierungseinrichtungen (z. B. Geräte mit bestimmter Funktion oder bestimmten Namen, Bausteinen oder Automatisierungsprogrammen), also auf solche Objekte, die dem Automatisierungstechniker aus seinem Arbeitsumfeld heraus bereits vertraut sind.

Beispiele für solche Regeln sind:
- Erlaube einem Inbetriebsetzer, dass Datenwort 10 in Datenbaustein 100 zu ändern;
- erlaube einem Bedienen- und Beobachten-System, alle Datenworte des Datenbausteins 200 zu lesen;
- erlaube einem Monteur in der Inbetriebnahme-Phase der Anlage alle Datenbausteine zu ändern;
- erlaube dem Monteur 1 in der Betriebsphase alle Bausteine zu lesen;
- erlaube dem Monteur 2 die Baugruppe 1 zu stoppen und zu starten;
- erlaube dem Monteur 3, die Konfiguration der Baugruppe 3 zu ändern.

Ist eine Netzwerk-Schutzeinrichtung adresstransparent ausgebildet oder eingerichtet bzw. eingestellt, so ermöglicht dies, dass eine solche Netzwerk-Schutzeinrichtung auch nachträglich in ein bestehendes Netzwerk integriert werden kann. Eine Umprojektierung ist dabei nicht erforderlich bzw. deren Aufwand kann deutlich reduziert werden. Da die Netzwerk-Schutzeinrichtung dann transparent arbeitet, können auch nicht "proxy"-fähige Automatisierungsprotokolle unverändert weiter verwendet werden. Zusätzlich kann eine derart adresstransparent ausgebildete Netzwerk-Schutzeinrichtung nicht durch Hilfsmittel, wie beispielsweise "Traceroute" entdeckt werden, was einen Angriff auf die Netzwerk-Schutzeinrichtung von Extern wesentlich erschwert.

Im Folgenden wird die Erfindung beispielhaft mit Bezug auf die beiliegenden Figuren näher erläutert.

Es zeigen:
- Figur 1: Beispiel für ein Automatisierungsnetz, an welches ein externer PC über eine Firewall angeschlossen ist;
- Figur 2a: Nachrichtenübertragungs-Diagramm für eine Firewall ohne Adress-Transparenz;
- Figur 2b: Nachrichtenübertragungs-Diagramm für eine Firewall mit Adresse-Transparenz.

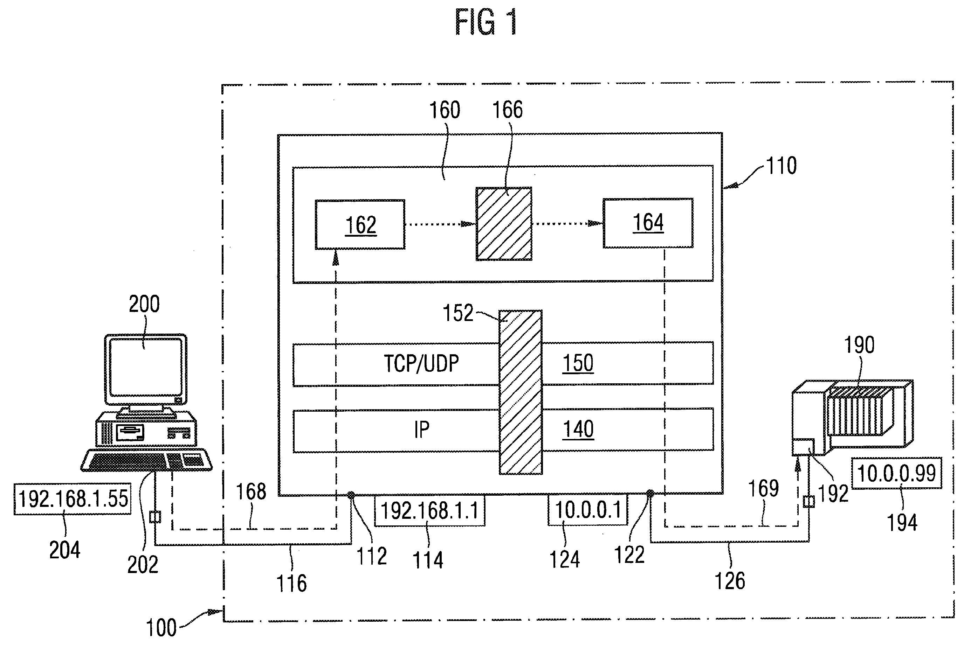

Figur 1 zeigt ein Automatisierungsnetz 100 mit einer speicherprogrammierbaren Steuerung ("Programmable Logic Controller" (PLC)) 190, welche über ein Ethernet-Kabel 126 mit einer Firewall 110 verbunden ist, wobei die Firewall 110 ein Beispiel für eine Netzwerk-Schutzeinrichtung gemäß der vorliegenden Beschreibung ist. Die Firewall 110 dient dem Schutz des dahinterliegenden Automatisierungsnetzes 100 und filtert entsprechend von außerhalb des Automatisierungsnetzes 100 kommende Nachrichten. Figur 1 zeigt einen Computer (PC) 200 außerhalb des Automatisierungsnetzes 100, welcher über ein Ethernet-Kabel 116 mit der Firewall verbunden ist.

In Figur 1 ist innerhalb des Symbols für die Firewall 110 der OSI-Schichtaufbau der Firewall 110 dargestellt. Gezeigt ist eine IP-Schicht 140, welche im OSI-Modell einer OSI-Schicht-3 entspricht. Weiterhin ist darüber eine TCP/UDP-Schicht 150 dargestellt, welche einer OSI-Schicht-4 entspricht. Als oberste Schicht im dargestellten Schichtmodell der Firewall 110 ist eine Anwendungsschicht 160 dargestellt, welche einer OSI-Schicht-7 entspricht. Innerhalb der IP-Schicht 140 und TCP-Schicht 150 ist eine Schicht-3+4 Schutzeinrichtung 152 dargestellt, welche eine Schicht-3+4 Filter-Funktionalität der Firewall 110 symbolisiert.

Innerhalb der Anwendungsschicht 160 ist ein PC-seitiger Protokoll-Proxy 162 (z. B. für ein sogenanntes S7-Protokoll für Siemens Automatisierungsgeräte) und ein PLC-seitiger zweiter Protokoll-Proxy 164 (z. B. ebenfalls für das S7-Protokoll) dargestellt. Zwischen dem PC-Protokoll-Proxy 162 und dem PLC-Protokoll-Proxy 164 ist eine Anwendungs-Schutzeinrichtung 166 dargestellt, über welche eine Filterung von durch die Firewall 100 zu prüfende Protokoll-Nachrichten auf der Anwendungsebene (z. B. S7-Protokoll-Ebene) erfolgt.

Die Ethernet-Leitung 116 vom PC 200 zur Firewall 110 ist am PC 200 an einer Schnittstelle 202 angeschlossen, welche eine PC-IP-Adresse 204 "192.168.1.55" aufweist. Das Ethernet-Kabel 116 ist an der Firewall 110 an einem externen Anschluss 112 mit einer IP-Adresse 114 "192.168.1.1" verbunden. Das Ethernet-Kabel 126 ist an einer internen Schnittstelle 122 der Firewall 110 mit einer IP-Adresse 124 "10.0.0.1" verbunden. Weiterhin ist dieses Ethernet-Kabel 126 mit der PLC 190 mit an einer Schnittstelle 192 mit einer IP-Adresse 194 "10.0.0.99" verbunden. Diese Adressen wurden bei der Installation dieses Netzwerks, wie es in Figur 1 dargestellt ist, festgelegt und konfiguriert.

Der Pfeil 168 vom PC 200 bis zur Anwendungsschicht 160 der Firewall 110 symbolisiert den Gang einer Protokoll-Nachricht gemäß dem S7-Protokoll, wie es beispielsweise zur Kommunikation mit speicherprogrammierbaren Steuerungen oder ähnlichen Automatisierungs-Einrichtungen der Firma Siemens verwendbar ist, vom PC 200 bis in die Anwendungsschicht 160 der Firewall 110. Gemäß dem Vorgehen entsprechend dem OSI-Schichtmodell wird die eigentliche Protokollnachricht gemäß dem S7-Protokoll im PC 200 entsprechend den Vorgaben der Transportschicht (Schicht 4) und dann der Netzwerk-Schicht (Schicht 3) verkapselt und dann über das Ethernet-Kabel 116 an die Firewall 110 übertragen.

Dort wird sie durch deren IP-Schicht 140 und danach deren Transportschicht 150 wieder entkapselt und die eigentliche S7-Protokolinachricht an die Anwendungsschicht 160 und dort dem PC-seitigen Protokoll-Proxy 162 übertragen. Der Protokoll-Proxy kann den Inhalt der S7-Protokoll-Nachricht analysieren und gibt diese Analyse-Ergebnisse an die Schicht-7-Schutzeinrichtung 166 weiter, welche Regeln darüber enthält, welche automatisierungstechnischen Handlungsziele gestattet sind und welche nicht gestattet sind. Daraufhin wird in der Schicht 7-Schutzeinrichtung 166 eine Entscheidung gefällt, ob die an die Firewall 110 für die PLC 190 übertragene Nachricht gemäß der Vorgaben in der Schutzeinrichtung 166 weiter übertragen werden darf oder geblockt werden muss.

Solche Regeln können beispielsweise umfassen:
- Eine Betriebsartenumschaltung wie beispielsweise Start, Stopp, Run usw. ist gestattet oder verboten;
- bestimmte Protokoll-Adressen oder Gruppen von Protokoll-Adressen (im vorliegenden Beispiel z. B. S7-Adressen dürfen Protokollnachrichten ins Automatisierungsnetz übertragen, andere nicht;
- das Laden von Anwenderprogrammen ist zulässig oder nicht;
- das Parametrieren oder Umparametrieren von Anwenderbausteinen ist zulässig oder nicht;
- das Lesen von Parametern oder Schreiben von Parametern ist zulässig oder nicht;
- das Konfigurieren bestimmter Hardware oder aller Hardware ist zulässig oder nicht;
- Test- und Inbetriebnahme-Aktionen sind zulässig oder nicht (z. B. das Setzen von Haltepunkten, das Einstellen eines Einzelschrittbetriebes oder das Durchführen eines Einzelschrittbetriebes;
- Diagnose-Aktionen sind zulässig oder nicht (beispielsweise das Lesen eines Diagnose-Puffers);
- Bedien-Aktionen sind im Produktiv-Betrieb zulässig oder nicht.

Die Filterregeln in der Schicht-7-Schutzeinrichtung 166 können beispielsweise beliebige Kombinationen der vorstehend genannten Regelelemente bzw. Bausteine umfassen. Solche Kombinationen können beispielsweise sein:
- Erlaube einem Inbetriebsetzer bestimmte Daten-Worte in einem bestimmten Datenbaustein der PLC 190 zu ändern;
- erlaube einem Bedienen-und-Beobachten-System alle Daten-worte eines weiteren Datenbausteins in der PLC 190 zu lesen;
- erlaube einem Monteur während des Zustands: "Inbetriebnahme" der PLC 190 und einer damit verbundenen Anlage (nicht in Figur 1 dargestellt) alle Datenbausteine zu ändern;
- erlaube einem ersten Monteur in einem Zustand "Betrieb" der PLC 190 und der daran angeschlossenen Anlage alle Datenbausteine zu lesen;
- erlaube einem zweiten Monteur eine erste Baugruppe der PLC 190 zu stoppen und zu starten (oder andere Betriebsarten Umschaltungen vorzunehmen);
- erlaube einem dritten Monteur die Konfiguration einer weiteren Baugruppe der PLC 190 zu ändern.

Ist die vom PC 200 übertragene S7-Protokoll-Nachricht gemäß der Schicht-7-Schutzeinrichtung 166 zulässig, so wird sie an den PLC-seitigen Protokoll-Proxy 164 übergeben und von diesem nach entsprechender Verpackung durch die Transportschicht 150 und Netzwerkschicht 140 über das Ethernet-Kabel 126 an die PLC 190 übertragen.

Ist die Nachricht gemäß der Regeln in der Schicht 7-Schutzeinrichtung 166 nicht zulässig, so sendet die Firewall 110 eine Quittierungs-Nachricht gemäß dem S7-Protokoll an den PC 200 zurück, dass die Nachricht von der Firewall 110 korrekt erhalten und/oder geblockt wurde. Auf diese Weise erhält der PC 200 z.B. eine Nachricht über die korrekte Übertragung der S7-Protokoll-Nachricht an das Automatisierungsnetz 100, und/oder die Information, dass diese dort aber nicht umgesetzt wird.

Der Nachrichtenfluss von der Anwendungsschicht 160 der Firewall 110 bis zur PLC 190 ist durch einen zweiten Pfeil 169 in Figur 1 symbolisiert.

Zusätzlich zur Schutzfunktion in der Anwendungsschicht 160 weist die Firewall 110 die weitere Schicht 3+4 Schutzeinrichtung 152 auf, anhand welcher beispielsweise eine weitere oder alternative Filterung von Nachrichten vom PC 200 zur PLC 190 auf IP-Ebene (beispielsweise die Zulassung oder Nichtzulassung bestimmter IP-Adressen als Sender und/oder Empfänger) oder auf TCP-Ebene erfolgen. Dabei kann die Firewall 110 beispielsweise sowohl als eine reine Schicht-7-Firewall betrieben werden, in welcher nur die Schutzeinrichtung 166 in Schicht-7 160 aktiv ist, als auch als reine Schicht-3+4 Firewall, bei welchen nur die Schicht -3+4 Schutzeinrichtung 152 aktiv ist, als auch als kombinierte Firewall, bei welcher beide Schutzeinrichtungen verwendet werden. Die Firewall 110 kann dabei derart parametriert werden, dass die drei genannten Betriebsarten durch eine solche Parametrierung einstellbar und vorgebbar sind.

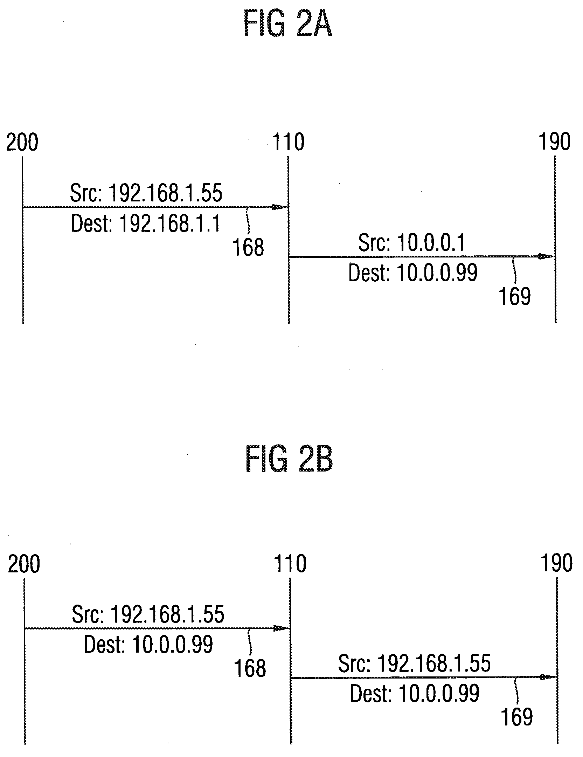

Figur 2a zeigt ein Nachrichtenübertragungs-Diagramm, im in Figur 1 dargestellten System bei einer nicht adress-transparenten Arbeitsweise der Firewall 110. Dabei wird vom PC 200 zur Firewall 110 eine S7-Protokoll-Nachricht mit einer Zieladresse "192.168.1.1" der PC-Schnittstelle 112 der Firewall 110 und einer Quelladresse "192.168.1.55" der Schnittstelle 202 des PCs 200 gesendet, was in Figur 2a durch den Pfeil 168 symbolisiert ist.

Im in Figur 2a dargestellten Fall wird diese S7-Protokoll-Nachricht von der Firewall zugelassen und weiter an die PLC 190 übertragen, was durch den Pfeil 169, welcher dem Pfeil 169 in Figur 1 entspricht, dargestellt ist. Diese Nachricht wird logisch von der PLC-Schnittstelle 122 der Firewall 110 zur Eingangsschnittstelle 192 der PLC 190 übertragen und hat daher eine Quelladresse "10.0.0.1" der Firewall-Schnittstelle 122 und eine Empfängeradresse "10.0.0.99" der Schnittstelle 192 der PLC 190. Bei dieser nicht transparenten Arbeitsweise wird also innerhalb der Firewall 110 die Adresse entsprechend den nach der Weiterleitung relevanten Schnittstellen von Quelle und Ziel jeweils umgestellt.

Figur 2b zeigt die gleiche Nachrichtenübertragung im Fall einer adress-transparenten Arbeitsweise der Firewall 110. Hierbei wird logisch die S7-Protokoll-Nachricht direkt von PC 200 und dessen Schnittstelle 202 an die Eingangs-Schnittstelle 192 der PLC 190 gesendet und daher als Quelladresse sowohl für die Nachricht vom PC 200 zur Firewall 110 als auch von der Firewall 110 zur PLC 190 jeweils die IP-Adresse "192.168.1.55" der PC-Schnittstelle 202 verwendet. Als Zieladresse wird dementsprechend jeweils die IP-Adresse "10.0.0.99" der Eingangs-Schnittstelle 192 der PLC 190 verwendet. Eine Änderung dieser Adressen innerhalb der Firewall findet nicht statt. In diesem transparenten Fall verhält sich die Firewall 110 in der dargestellten Konstellation beispielsweise wie eine so genannte "Bridge". Die S7-Protokoll-Nachricht selbst und die relevanten Parameter der Netzwerkschicht 140 werden nicht modifiziert.

Bei einem adress-transparenten Betrieb der Netzwerk-Schutzeinrichtung bzw. Firewall 110 ist es auch möglich, die Firewall 110, bzw. allgemein eine Netzwerk-Schutzeinrichtung gemäß der vorliegenden Beschreibung, auch in so genannten nichtsegmentierten Netzwerken einzusetzen. Mit "Nichtsegmentiert" ist in diesem Zusammenhang beispielsweise gemeint, dass sowohl die externe Datenverarbeitungseinrichtung, beispielsweise der PC 200 in Figur 1 und 2, die Firewall 110 bzw. allgemein die Netzwerk-Schutzeinrichtung gemäß der vorliegenden Beschreibung als auch die Automatisierungseinrichtung gemäß der vorliegenden Beschreibung und im vorliegenden Beispiel die PLC 190 im gleichen IP-Subnetz sind. Die Schutzeinrichtung ist in diesem Fall sowohl für die externe Datenverarbeitungs-Einrichtung / den PC 200 als auch für die Automatisierungseinrichtung / die PLC 190 auf der Ebene des IP-Protokolls (OSI-Schicht-3) nicht sichtbar. Um diese Verhalten umzusetzen, kann die Netzwerk-Schutzeinrichtung/Firewall 110 beispielsweise die Mechanismen von so genanntem "Proxy-ARP" verwenden.

Die vorliegende Erfindung beschreibt eine Netzwerk-Schutzeinrichtung für ein Automatisierungsnetzwerk, welche es ermöglicht, den Inhalt von Protokoll-Nachrichten eines verwendeten Automatisierungsprotokolls zu analysieren und aufgrund des Inhalts bzw. dadurch erreichter Handlungsziele zu filtern. Damit wird die Einrichtung der Netzwerk-Schutzeinrichtung für einen Anwender erleichtert und somit auch sicherer und besserer verständlich gemacht. Weiterhin wird die Arbeitsweise der Netzwerk-Schutzeinrichtung unabhängig bzw. unabhängiger von der physikalischen Konfiguration der beteiligten Netze, beispielsweise des geschützten Automatisierungsnetzes und/oder der an dieses Netz angeschlossenen externen Einrichtungen und Netze. Auf diese Weise können auch Änderungen in diesen Netzen, beispielsweise der Austausch von Geräten die Änderung von Adressen oder der zusätzliche Einbau von Geräten erfolgen, ohne die Netzwerk-Schutzeinrichtung dabei an jede dieser Änderung einzeln anpassen zu müssen. Auch dies erhöht die Flexibilität und damit auch die Sicherheit einer derartigen Netzwerk-Schutzeinrichtung.

## Patentansprüche

1. Netzwerk-Schutzeinrichtung (110) zur Kontrolle der Kommunikation einer externen Datenverarbeitungseinrichtung (200) außerhalb eines Automatisierungsnetzwerks (100) mit einer Automatisierungseinrichtung (190) in dem Automatisierungsnetzwerk (100),
wobei zur Kommunikation mit der Automatisierungseinrichtung (190) ein Automatisierungsprotokoll vorgesehen ist, wobei in der Netzwerk-Schutzeinrichtung (110) Protokoll-Regeln hinterlegt oder hinterlegbar sind, wobei die Protokoll-Regeln Vorgaben umfassen, die die Entscheidung über eine Weiterleitung oder Nicht-Weiterleitung einer Protokoll-Nachricht des Automatisierungsprotokolls von einem Inhalt der Protokoll-Nachricht abhängig machen, und wobei die Netzwerk-Schutzeinrichtung (110) zur Entscheidung über eine Weiterleitung oder Nicht-Weiterleitung einer eingehenden Protokoll-Nachricht des Automatisierungsprotokolls entsprechenden den Vorgaben der Protokoll-Regeln ausgebildet ist,
**dadurch gekennzeichnet,**
**dass** die in der Netzwerk-Schutzreinrichtung (110) hinterlegten Protokoll-Regeln Vorgaben umfassen, die die Entscheidung über das Weiterleiten oder Nicht-Weiterleiten der Protokoll-Nachricht weiterhin von einem Betriebszustand eines oder mehrerer Elemente (110, 190) des Automatisierungsnetzwerks (100) oder einer oder mehrerer mit dem Automatisierungsnetzwerk verbundenen Einrichtungen abhängig macht.

2. Netzwerk-Schutzeinrichtung nach Anspruch 1
**dadurch gekennzeichnet,**
**dass** die Netzwerk-Schutzeinrichtung (110) derart ausgebildet ist, dass bei einer Nicht-Weiterleitung der Protokoll-Nachricht eine Informations-Nachricht bezüglich der Nicht-Weiterleitung entsprechend dem AutomatisierungsProtokoll an die externe Datenverarbeitungseinrichtung (200) gesendet wird.

3. Netzwerk-Schutzeinrichtung nach Anspruch 1 oder 2
**dadurch gekennzeichnet,**
**dass** die Netzwerk-Schutzeinrichtung (110) zu einer adresstransparenten Arbeitsweise ausgebildet ist, insbesondere, dass zur Realisierung der adresstransparenten Arbeitsweise die Netzwerk-Schutzeinrichtung (110) als Stellvertreter für die durch sie geschützten Teilnehmer (190) des Automatisierungsnetzes (100) arbeitet.

4. Netzwerk-Schutzeinrichtung nach einem der Ansprüche 1 bis 3,
**dadurch gekennzeichnet,**
**dass** die Netzwerk-Schutzeinrichtung (110) derart ausgebildet und eingerichtet ist, dass wahlweise eine adresstransparente oder eine nicht-adresstransparente Arbeitsweise einstellbar, konfigurierbar und/oder vorgebbar ist.

5. Netzwerk-Schutzeinrichtung nach einem der Ansprüche 1 bis 4,
**dadurch gekennzeichnet,**
**dass** der Inhalt der Protokoll-Nachricht zum Auslösen einer Automatisierungs-Aktion in der die Protokoll-Nachricht empfangenden Automatisierungseinrichtung (190) eingerichtet ist, und
**dass** die Protokoll-Regeln Vorgaben umfassen, die die Entscheidung über eine Weiterleitung oder Nicht-Weiterleitung der Protokoll-Nachricht von der auszulösenden Automatisierungs-Aktion und/oder der Art der auszulösenden Automatisierungs-Aktion abhängig machen.

6. Netzwerk-Schutzeinrichtung nach Anspruch 5,
**dadurch gekennzeichnet,**
**dass** die Automatisierungs-Aktion umfasst:
- eine Betriebsarten-Umschaltung, insbesondere ein Starten oder Anhalten eines Vorgangs, und/oder
- das Laden eines Automatisierungs-Programms, und/oder
- das Setzen von Parametern, Informationen oder Werten in einem Steuerungs-Modul oder Automatisierungsgerät, und/oder
- das Auslesen von Parametern, Werten oder Informationen aus einem Steuerungs-Modul oder Automatisierungsgerät, und/oder
- die Steuerung oder Regelung eines Automatisierungs-Programms oder der Eingriff in ein Automatisierungsprogramm, und/oder
- die Ansteuerung eines Sensors oder Aktors.

7. Netzwerk-Schutzeinrichtung nach einem der Ansprüche 1 bis 6,
**dadurch gekennzeichnet,**
**dass** die in der Netzwerk-Schutzreinrichtung (110) hinterlegten Protokoll-Regeln Vorgaben umfassen, die die Entscheidung über das Weiterleiten oder Nicht-Weiterleiten der Protokoll-Nachricht weiterhin von zeitlichen und/oder örtlichen Vorgaben abhängig macht.

8. Netzwerk-Schutzeinrichtung nach einem der Ansprüche 1 bis 7,
**dadurch gekennzeichnet,**
**dass** die in der Netzwerk-Schutzreinrichtung (110) hinterlegten Protokoll-Regeln Vorgaben umfassen, die die Entscheidung über das Weiterleiten oder Nicht-Weiterleiten der Protokoll-Nachricht weiterhin von einem Sender und/oder einem Auftraggeber und/oder einem Empfänger der Protokoll-Nachricht abhängig macht.

9. Netzwerk-Schutzeinrichtung nach einem der Ansprüche 1 bis 8,
**dadurch gekennzeichnet,**
**dass** die in der Netzwerk-Schutzreinrichtung (110) hinterlegten Protokoll-Regeln Vorgaben umfassen, die die Entscheidung über ein Weiterleiten oder Nicht-Weiterleiten der Protokoll-Nachricht weiterhin vom Vorliegen eines einem Sender und/oder Auftraggeber der Protokoll-Nachricht zugeordneten Sicherheits-Codes abhängig macht, insbesondere, dass die Protokoll-Nachricht.nicht weitergeleitet wird, wenn der dem Sender oder Auftraggeber der Protokoll-Nachricht zugeordnete Sicherheits-Code nicht vorliegt.

10. Netzwerk-Schutzeinrichtung nach einem der Ansprüche 1 bis 9,
**dadurch gekennzeichnet,**
**dass** die in der Netzwerk-Schutzreinrichtung (110) hinterlegten Protokoll-Regeln Vorgaben umfassen, die die Entscheidung über das Weiterleiten oder Nicht-Weiterleiten einer Protokoll-Nachricht weiterhin von einer Authentifizierung eines Sender und/oder Auftraggebers der Protokoll-Nachricht abhängig macht.

11. Netzwerk-Schutzeinrichtung nach einem der Ansprüche 1 bis 10,
**dadurch gekennzeichnet,**
**dass** die in der Netzwerk-Schutzreinrichtung (110) hinter legten Protokoll-Regeln Vorgaben umfassen, die die Entscheidung über eine Weiterleitung oder Nicht-Weiterleitung einer Protokoll-Nachricht von der externen Datenverarbeitungseinrichtung (200) an die Automatisierungseinrichtung (190) im Automatisierungsnetzwerk weiterhin von einer IP-Adresse der Protokoll-Nachricht, eines IP-Protokolls der Protokoll-Nachricht und/oder eines "Ports" abhängig macht.

## Claims

1. Network protection device (110) for controlling communication between an external data processing device (200) outside an automation network (100) and an automation device (190) in the automation network (100), an automation protocol being provided for communicating with the automation device (190), protocol rules being stored or being able to be stored in the network protection device (110), the protocol rules comprising specifications which make the decision on forwarding or non-forwarding of a protocol message from the automation protocol dependent on contents of the protocol message, and the network protection device (110) being designed to decide on forwarding or non-forwarding of an incoming protocol message from the automation protocol according to the specifications of the protocol rules,
**characterized in that**
the protocol rules stored in the network protection device (110) comprise specifications which also make the decision on the forwarding or non-forwarding of the protocol message dependent on an operating state of one or more elements (110, 190) of the automation network (100) or of one or more devices connected to the automation network.

2. Network protection device according to Claim 1,
**characterized in that**
the network protection device (110) is designed in such a manner that, in the event of the protocol message not being forwarded, an information message relating to the non-forwarding is transmitted to the external data processing device (200) according to the automation protocol.

3. Network protection device according to Claim 1 or 2,
**characterized in that**
the network protection device (110) is designed for an address-transparent method of operation, in particular **in that**, in order to implement the address-transparent method of operation, the network protection device (110) operates as a representative of the subscribers (190) of the automation network (100) which are protected thereby.

4. Network protection device according to one of Claims 1 to 3,
**characterized in that**
the network protection device (110) is designed and set up in such a manner that either an address-transparent or a non-address-transparent method of operation can be set, configured and/or specified.

5. Network protection device according to one of Claims 1 to 4,
**characterized in that**
the contents of the protocol message are set up to trigger an automation action in the automation device (190) receiving the protocol message, and
**in that** the protocol rules comprise specifications which make the decision on forwarding or non-forwarding of the protocol message dependent on the automation action to be triggered and/or on the type of automation action to be triggered.

6. Network protection device according to Claim 5, **characterized in that**
the automation action comprises:
- an operating mode changeover, in particular starting or stopping of a process, and/or
- the loading of an automation program, and/or
- the setting of parameters, information or values in a control module or automation unit, and/or
- the reading of parameters, values or information from a control module or automation unit, and/or
- the control or regulation of an automation program or the intervention in an automation program, and/or
- the driving of a sensor or actuator.

7. Network protection device according to one of Claims 1 to 6,
**characterized in that**
the protocol rules stored in the network protection device (110) comprise specifications which also make the decision on the forwarding or non-forwarding of the protocol message dependent on temporal and/or local specifications.

8. Network protection device according to one of Claims 1 to 7,
**characterized in that**
the protocol rules stored in the network protection device (110) comprise specifications which also make the decision on the forwarding or non-forwarding of the protocol message dependent on a sender and/or a client and/or a recipient of the protocol message.

9. Network protection device according to one of Claims 1 to 8,
**characterized in that**
the protocol rules stored in the network protection device (110) comprise specifications which also make the decision on forwarding or non-forwarding of the protocol message dependent on the presence of a security code assigned to a sender and/or client of the protocol message,
in particular **in that** the protocol message is not forwarded if the security code assigned to the sender or client of the protocol message is not present.

10. Network protection device according to one of Claims 1 to 9,
**characterized in that**
the protocol rules stored in the network protection device (110) comprise specifications which also make the decision on the forwarding or non-forwarding of a protocol message dependent on authentication of a sender and/or client of the protocol message.

11. Network protection device according to one of Claims 1 to 10,
**characterized in that**
the protocol rules stored in the network protection device (110) comprise specifications which also make the decision on forwarding or non-forwarding of a protocol message from the external data processing device (200) to the automation device (190) in the automation network dependent on an IP address of the protocol message, an IP protocol of the protocol message and/or a port.

## Revendications

1. Dispositif ( 110 ) de protection de réseau pour le contrôle de la communication d'un dispositif ( 200 ) informatique extérieur, à l'extérieur d'un réseau ( 100 ) d'automatisation, avec un dispositif ( 190 ) d'automatisation du réseau ( 100 ) d'automatisation,
dans lequel il est prévu, pour la communication avec le dispositif ( 190 ) d'automatisation, un protocole d'automatisation,
dans lequel il est mémorisé ou il peut être mémorisé des règles de protocole dans le dispositif ( 110 ) de protection de réseau, les règles de protocole comprenant des prescriptions qui font dépendre la décision d'acheminement ou de non acheminement d'un message du protocole d'automatisation d'un contenu du message de protocole et dans lequel le dispositif ( 110 ) de protection de réseau est constitué pour décider d'un acheminement ou d'un non acheminement d'un message entrant du protocole d'automatisation, en fonction des prescriptions des règles de protocole,
**caractérisé**
**en ce que** les règles de protocole, mémorisées dans le dispositif ( 110 ) de protection de réseau, comprennent des prescriptions qui rendent la décision sur l'acheminement ou le non acheminement du message de protocole dépendante en outre d'un état de fonctionnement d'un ou de plusieurs éléments ( 110, 190 ) du réseau ( 100 ) d'automatisation, ou d'un ou de plusieurs dispositifs reliés au réseau d'automatisation.

2. Dispositif de protection de réseau suivant la revendication 1,
**caractérisé**
**en ce que** le dispositif ( 110 ) de protection de réseau est constitué de manière à envoyer au dispositif ( 200 ) informatique extérieur, conformément au protocole d'automatisation, si le message de protocole n'est pas acheminé, un message d'information concernant le non acheminement.

3. Dispositif de protection de réseau suivant la revendication 1 ou 2,
**caractérisé**
**en ce que** le dispositif ( 110 ) de protection de réseau est constitué pour un mode de travail transparent en adresse, notamment en ce que, pour la réalisation du mode de travail transparent en adresse, le dispositif ( 110 ) de protection de réseau opère comme représentant du participant ( 190 ) du réseau ( 100 ) d'automatisation qu'il protège.

4. Dispositif de protection de réseau suivant l'une des revendications 1 à 3,
**caractérisé**
**en ce que** le dispositif ( 110 ) de protection de réseau est constitué et conçu de manière à ce qu'au choix un mode de travail transparent en adresse ou un mode de travail qui n'est pas transparent en adresse puisse être établi, configuré et/ou prescrit.

5. Dispositif de protection de réseau suivant l'une des revendications 1 à 4,
**caractérisé**
**en ce que** le contenu du message de protocole est conçu pour le déclenchement d'une action d'automatisation dans le dispositif ( 190 ) d'automatisation recevant le message de protocole et
**en ce que** les règles de protocole comprennent des prescriptions qui rendent la décision de l'acheminement ou du non acheminement du message de protocole dépendante de l'action d'automatisation à déclencher et/ou du type de l'action d'automatisation à déclencher.

6. Dispositif de protection de réseau suivant la revendication 5,
**caractérisé**
**en ce que** l'action d'automatisation comprend :
- une commutation du type de fonctionnement, notamment un démarrage ou un arrêt d'une opération et/ou
- la charge d'un programme d'automatisation et/ou
- l'établissement de paramètres, d'informations ou de valeurs dans un module de commande ou dans un appareil d'automatisation et/ou
- la lecture de paramètres, de valeurs ou d'informations dans un module de commande ou dans un appareil d'automatisation et/ou
- la commande ou la régulation d'un programme d'automatisation ou l'intervention dans un programme d'automatisation et/ou
- la commande d'un capteur ou d'un actionneur.

7. Dispositif de protection de réseau suivant l'une des revendications 1 à 6,
**caractérisé**
**en ce que** les règles de protocole, mémorisées dans le dispositif ( 110 ) de protection de réseau, comprennent des prescriptions qui rendent la décision de l'acheminement ou du non acheminement du message de protocole dépendante en outre de prescriptions de temps et/ou de lieu.

8. Dispositif de protection de réseau suivant l'une des revendications 1 à 7,
**caractérisé**
**en ce que** les règles de protocole, mémorisées dans le dispositif ( 110 ) de protection de réseau, comprennent des prescriptions qui rendent la décision de l'acheminement ou du non acheminement du message de protocole dépendante en outre d'un émetteur et/ou d'un donneur d'ordre et/ou d'un récepteur du message de protocole.

9. Dispositif de protection de réseau suivant l'une des revendications 1 à 8,
**caractérisé**
**en ce que** les règles de protocole, mémorisées dans le dispositif ( 110 ) de protection d'un réseau, comprennent des prescriptions qui rendent la décision d'un acheminement ou d'un non acheminement du message de protocole dépendante en outre de la présence d'un code de sécurité associé à un émetteur et/ou un donneur d'ordre du message de protocole,
notamment en ce que le message de protocole n'est pas acheminé si le code de sécurité associé à l'émetteur ou au donneur d'ordre du message de protocole n'est pas présent.

10. Dispositif de protection de réseau suivant l'une des revendications 1 à 9,
**caractérisé**
**en ce que** les règles de protocole, mémorisées dans le dispositif ( 110 ) de protection de réseau, comprennent des prescriptions qui rendent la décision de l'acheminement ou du non acheminement d'un message de protocole dépendante en outre d'une authentification d'un émetteur et/ou d'un donneur d'ordre du message de protocole.

11. Dispositif de protection de réseau suivant l'une des revendications 1 à 10,
**caractérisé en ce que** les règles de protocole, mémorisées dans le dispositif ( 110 ) de protection de réseau, comprennent des prescriptions qui rendent la décision d'un acheminement ou d'un non acheminement d'un message de protocole du dispositif ( 200 ) informatique extérieur au dispositif ( 190 ) d'automatisation du réseau d'automatisation dépendante en outre d'une adresse IP du message de protocole d'un protocole IP du message de protocole et/ou d'un « Port ».
